# EUROPEAN PATENT APPLICATION

(11) **EP 3 570 011 A1**
(43) Date of publication of application: **20.11.2019**
(21) Application number: 18738689.1
(22) Date of filing: 11.01.2018
(51) Int. Cl.: G01N 21/57, G01N 21/47

(54) **MEASURING DEVICE, INFORMATION PROCESSING DEVICE, INFORMATION PROCESSING METHOD, AND PROGRAM**

(30) Priority: 13.01.2017 JP 2017004612
(71) Applicant: Canon Kabushiki Kaisha, Tokyo 146-8501 (JP)
(72) Inventor: KAWANAGO, Hiroshi, Tokyo 146-8501 (JP); KUROKI, Yukie, Tokyo 146-8501 (JP)
(74) Representative: TBK
(86) International application number: PCT/JP2018/000431
(87) International publication number: WO 2018/131634

(57) **Abstract**

The present invention provides a measurement apparatus characterized by comprising: a measurement unit configured to measure a reflection characteristic of a surface; an image capturing unit configured to, by image-capturing a measurement region on the surface on which the reflection characteristic is measured by the measurement unit, obtain an image of the measurement region; and a control unit configured to cause a display unit to display a plurality of measurement results obtained by a plurality of times of measurement by the measurement unit, wherein the control unit causes the display unit to display the image obtained by the image capturing unit which corresponds to a measurement result selected from the plurality of measurement results, together with the plurality of measurement results.

## Description

### TECHNICAL FIELD

The present invention relates to a measurement apparatus, an information processing apparatus, an information processing method, and a program.

### BACKGROUND ART

Surfaces such as printing surfaces, coating surfaces, and the outer surfaces of products are evaluated by using index values concerning color, gloss, diffusion, cloudiness, and the like specified by JIS or ISO as reflection characteristics. In a measurement apparatus that measures such reflection characteristics, when, for example, a defect such as a flaw has occurred in a target region (measurement region) where reflection characteristic is to be measured, the index value of the reflection characteristic can change due to the defect. Accordingly, it is preferable for the measurement apparatus to capture an image of the measurement region while measuring the reflection characteristic of the measurement region and store the captured image of the measurement region in association with the measurement result on the reflection characteristic. PTL 1 has proposed a method of capturing, with a camera, an image of a region where a reflection characteristic has been measured and storing the obtained image.

### CITATION LIST

### PATENT LITERATURE

PTL 1: Japanese Patent Laid-Open No. 2002-508076

### SUMMARY OF INVENTION

### TECHNICAL PROBLEM

Upon measuring reflection characteristics a plurality of times, the user may find out a specific measurement result from a plurality of measurement results (index values) obtained by the plurality of times of measurement and want to check an image of the measurement region stored in association with the found measurement result. In addition, the user may want to specify (identify) a measurement result from the plurality of measurement results by referring to the image. For example, in such a case, it is preferable in terms of user convenience to allow the user to easily check the plurality of measurement results and the image.

It is therefore an exemplary object of the present invention to provide a measurement apparatus advantageous in terms of convenience in using measurement results.

### SOLUTION TO PROBLEM

In order to achieve the above object, a measurement apparatus according to one aspect of the present invention is characterized by comprising a measurement unit configured to measure a reflection characteristic of a surface, an image capturing unit configured to obtain an image of the measurement region by image-capturing a measurement region on the surface on which the reflection characteristic is measured by the measurement unit, and a control unit configured to cause a display unit to display a plurality of measurement results obtained by a plurality of times of measurement by the measurement unit, wherein the control unit causes the display unit to display the image obtained by the image capturing unit which corresponds to a measurement result selected from the plurality of measurement results, together with the plurality of measurement results.

### ADVANTAGEOUS EFFECTS OF INVENTION

The present invention can provide a measurement apparatus advantageous in terms of convenience in using measurement results.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate presently preferred embodiments of the invention, and together with the general description given above and the detailed description of the preferred embodiments given below, serve to explain the principles of the invention.
Fig. 1 is a view showing an outer appearance of a measurement system;
Fig. 2 is a view showing the internal arrangement of a measurement apparatus when viewed from the Y direction;
Fig. 3 is a view showing the internal arrangement of the measurement apparatus when viewed from the X direction;
Fig. 4 is a view showing an image of a second partial region;
Fig. 5 is a flowchart showing a method of measuring a reflection characteristic of a measurement surface;
Fig. 6 is a view showing a list window;
Fig. 7 is a view showing a detailed window; and
Fig. 8 is a view showing a list window.

### DESCRIPTION OF EMBODIMENTS

Preferred embodiments of the present invention will be described below with reference to the accompanying drawings. Note that the same reference numerals denote the same members and elements throughout the drawings, and any redundant description will be omitted.

### [Arrangement of Measurement System]

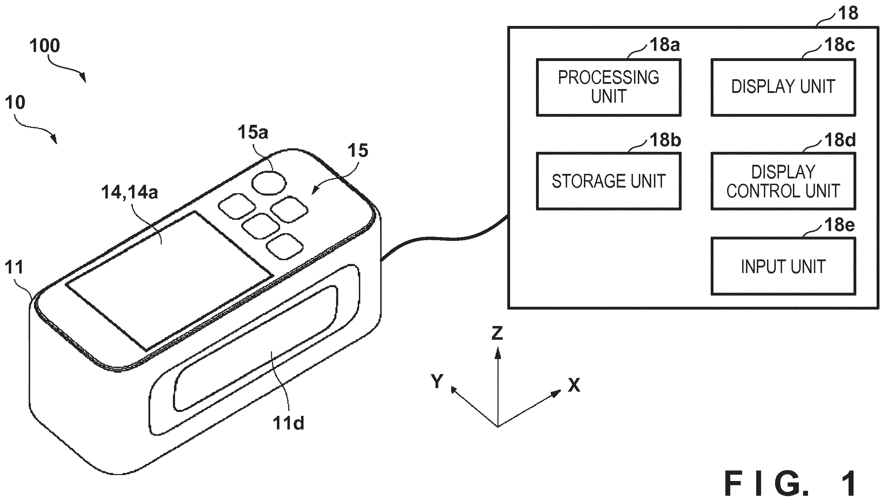

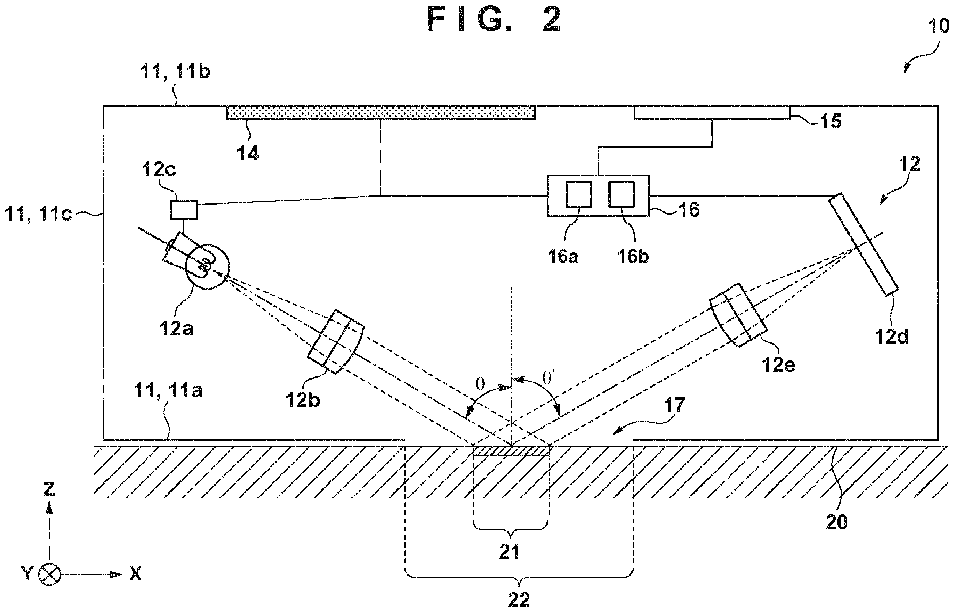

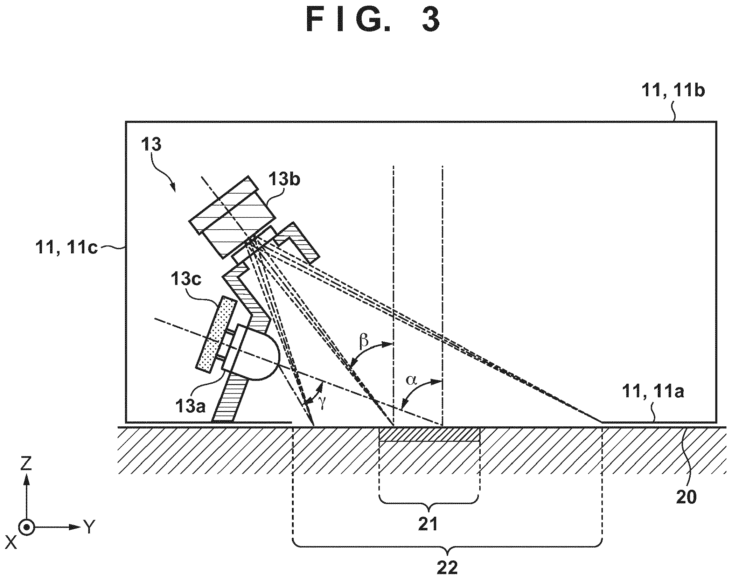

The arrangement of a measurement system 100 (measurement apparatus) according to the present invention will be described with reference to Figs. 1 to 3. Fig. 1 is a view showing an outer appearance of the measurement system 100. Fig. 2 is a view showing the internal arrangement of a measurement apparatus 10 when viewed from the Y direction. Fig. 3 is a view showing the internal arrangement of the measurement apparatus 10 when viewed from the X direction. The measurement system 100 can include the measurement apparatus 10 and an information processing apparatus 18 (computer). The information processing apparatus 18 can include, for example, a processing unit 18a including a CPU, a storage unit 18b including a memory, a display control unit 18d (control unit) that causes a display unit 18c to display the measurement result obtained by the measurement apparatus 10, and an input unit 18e including a mouse and a keyboard. The display unit 18c can include an LCD. The information processing apparatus 18 (processing unit 18a) is connected to the measurement apparatus 10 wirelessly or via a cable, and can acquire the reflection characteristic (index value) obtained by a control unit 16 and the image of a measurement surface 20 (second partial region 22) obtained by an image capturing unit 13 from the measurement apparatus 10 (control unit 16).

The measurement apparatus 10 can include, for example, a housing 11, a detection unit 12, the image capturing unit 13, a display unit 14a, a display control unit 14 (control unit), an operation unit 15 (input unit), and the control unit 16. The measurement apparatus 10 measures a reflection characteristic (index value) of the measurement surface 20 via an opening portion 17 of the housing 11 while outside light is blocked by the housing 11. The control unit 16 includes, for example, a processing unit 16a including a CPU and a storage unit 16b including a memory, and controls the detection unit 12, the image capturing unit 13, the display control unit 14, and the operation unit 15. In addition, a reflection characteristic can include at least one of a mirror gloss, haze, DOI (Distinctness of Image), and image clarity as an index value.

The housing 11 has, for example, a first surface 11a in which the opening portion 17 is formed, a second surface 11b on the opposite side to the first surface 11a, and a side surface 11c, and is placed on a measurement surface such that the first surface 11a is located on the measurement surface side (the first surface 11a faces the measurement surface). The detection unit 12, the image capturing unit 13, the display control unit 14, and the control unit 16 are provided in the housing. The display unit 14a (display) and the operation unit 15 (buttons) are provided on the second surface 11b of the housing 11. It is preferable in terms of operability to arrange the display control unit 14 and the operation unit 15 adjacent to each other on the housing (second surface 11b). In addition, a concave portion 11d (grip portion) for allowing the user to easily hold by hooking his/her finger is formed on the side surface 11c of the housing 11.

The detection unit 12 irradiates, with light, a first partial region 21 of the region of the measurement surface 20 at which the opening portion 17 of the housing 11 is located (part of the region of the measurement surface 20 image-captured by the image capturing unit 13 (to be described later)), and detects the light reflected by the first partial region 21. As shown in Fig. 2, the detection unit 12 includes, for example, an irradiation unit that irradiates the first partial region 21 with light and a light-receiving unit that receives the light reflected by the first partial region 21. The irradiation unit includes a light source 12a and a lens 12b, and irradiates the first partial region 21 with light. The light source 12a is connected to a light source control circuit 12c. The light source control circuit 12c adjusts the emission intensity of the light source 12a in accordance with a signal sent from the control unit 16 to the light source control circuit 12c. The light emitted from the light source 12a is converted into parallel light (collimated) by the lens 12b and enters the first partial region 21.

The light-receiving unit includes a sensor 12d and a lens 12e, and receives (detects) the light reflected by the first partial region 21. The sensor 12d includes an area sensor including a two-dimensional array of photoelectric conversion elements constituted by CCDs or CMOSs. The sensor 12d receives the light reflected by the first partial region 21 and collected by the lens 12e, and detects the intensity distribution of the reflected light from the first partial region 21. This allows the control unit 16 (processing unit 16a) to obtain a reflection characteristic of the first partial region 21 based on the intensity distribution data of the reflected light output from the sensor 12d (the detection result obtained by the detection unit 12). That is, in the measurement apparatus 10, the detection unit 12 and the control unit 16 (processing unit 16a) constitute a measurement unit that measures a reflection characteristic of the measurement surface 20, and the first partial region 21 is a measurement region whose reflection characteristic is measured by the measurement unit.

The display control unit 14 displays (outputs) a value (index value) representing the reflection characteristic of the first partial region 21 obtained by the control unit 16 to the display unit 14a such as an LCD provided on the second surface 11b of the housing 11. The user makes various types of settings such as operation conditions for the measurement apparatus 10 by operating the operation unit 15. The operation unit 15 includes a plurality of buttons provided on the second surface 11b of the housing 11. For example, upon detecting the signal generated when the user presses a button 15a of the plurality of buttons of the operation unit 15 (the signal input by the operation unit 15), the control unit 16 starts measuring a reflection characteristic of the measurement surface 20. The operation unit 15 according to this embodiment has a plurality of buttons. However, this is not exhaustive. For example, the display unit 14a may be of a touch panel type and used as the operation unit 15.

In this case, an incident angle θ of light entering the measurement surface 20 (a reflection angle θ' of light reflected by the measurement surface 20) at the time of measurement of a reflection characteristic of the measurement surface 20 is defined for each reflection characteristic index (standard) according to JIS, ISO, or the like. For example, when a mirror gloss is to be measured as a reflection characteristic index, the incident angle θ (reflection angle θ') is set to any one of 20°, 45°, 60°, 75°, and 85°. When a haze is to be measured as a reflection characteristic index, the incident angle θ (reflection angle θ') is set to 20° or 30°. When an image clarity is to be measured as a reflection characteristic index, the incident angle θ (reflection angle θ') is set to 45° or 60°. When a DOI is to be measured as a reflection characteristic index, the incident angle θ (reflection angle θ') is set to 20° or 30°.

The measurement apparatus 10 shown in Fig. 2 is provided with one detection unit 12 and measures a reflection characteristic of the measurement surface 20 at one type of incident angle θ (reflection angle θ'). As described above, however, the incident angle θ (reflection angle θ') is defined for each reflection characteristic index (standard). Accordingly, the measurement apparatus 10 may be provided with a plurality of detection units 12 with different incident angles θ (reflection angles θ') to measure reflection characteristics of the measurement surface 20 with a plurality of types of incident angles θ (reflection angles θ'). For example, providing the measurement apparatus 10 with the detection units 12 with an incident angle θ (reflection angle θ') of 20° and an incident angle θ (reflection angle θ') of 60° makes it possible to measure all of a mirror gloss, haze, image clarity, and DOI. Alternatively, the measurement apparatus 10 may be provided with a driving unit that drives one detection unit 12 so as to change the incident angle θ (reflection angle θ') of the detection unit 12 instead of being provided with a plurality of detection units 12.

The image capturing unit 13 captures an image of the measurement surface 20 via the opening portion 17 of the housing 11. The second partial region 22 of the measurement surface 20 image-captured by the image capturing unit 13 is preferably a region that includes the first partial region 21 from which reflected light is detected by the detection unit 12 and is larger (larger in area) than the first partial region 21. That is, the first partial region 21 may be part of the second partial region 22.

As shown in Fig. 3, the image capturing unit 13 includes a light source 13a that irradiates the second partial region 22 with light and a camera 13b that captures an image of the second partial region 22 irradiated with light. In this embodiment, the light source 13a and the camera 13b are arranged to obliquely irradiate the second partial region 22 with light and obliquely capture an image of the second partial region 22. More specifically, the light source 13a is arranged to set an angle (illumination angle α) to 60° at which the principal ray of light from the light source 13a enters the second partial region 22, and the camera 13b is arranged to set an angle (image capturing angle β) to 45° at which the second partial region 22 is image-captured. That is, the light source 13a and the camera 13b are arranged such that the image capturing angle β is smaller than the illumination angle α. Although the illumination angle α and the image capturing angle β can be arbitrarily set, such arrangement of the light source 13a and the camera 13b is advantageous when the internal space of the housing is narrow. The light source 13a and the camera 13b can be arranged in the space in the housing so as to irradiate the second partial region 22 with light from above and capture an image of the second partial region 22 from above as long as the space is wide and the light source 13a and the camera 13b do not interfere with the housing 11.

The light source 13a irradiates the second partial region 22 with light (illuminates the second partial region 22). The light source 13a is connected to a light source control circuit 13c. The emission intensity of the light source 13a can be adjusted in accordance with the signal sent from the control unit 16 to the light source control circuit 13c. As the light source 13a, a light source (for example, an LED) having a directional characteristic equal to or more than an angle γ is preferably used to irradiate the entire second partial region 22 with light, which is determined in accordance with the field angle of the camera 13b and the location of the camera 13b relative to the opening portion 17. The light source 13a according to this embodiment is configured to irradiate the second partial region 22 with light from a direction perpendicular to a direction (azimuth) in which the detection unit 12 irradiates the first partial region 21 with light. However, a direction in which the light source 13a irradiates the second partial region 22 with light can be arbitrarily set.

The camera 13b is formed from, for example, a CCD camera or CMOS camera, and captures an image of the second partial region 22 illuminated by the light source 13a, and outputs the image data (video data) of the second partial region 22 obtained by the image capturing operation. The display control unit 14 displays the image (video) of the second partial region 22 obtained by the image capturing unit 13 on the display unit 14a. In this case, the image of the second partial region 22 displayed on the display unit 14a includes information indicating the position of the first partial region 21 in the second partial region 22 (to be referred to as position information of the first partial region 21 hereinafter). This allows the user to visually recognize not only a measurement region (first partial region 21) where a reflection characteristic should be measured but also its peripheral portion on the display unit 14. This makes it possible to easily and accurately position the housing 11 (the detection unit 12 and the image capturing unit 13) so as to arrange the measurement region at a measurement target region on the measurement surface 20.

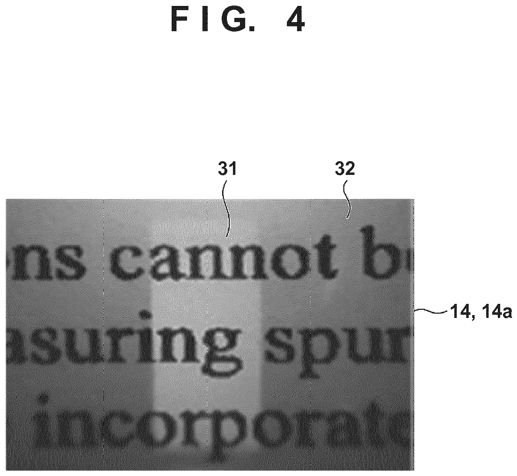

As one method of generating an image of the second partial region 22 having the position information of the first partial region 21, for example, there is available a method of capturing an image of the second partial region 22 by irradiating the second partial region 22 with light by the image capturing unit 13 while irradiating the first partial region 21 with light by the detection unit 12. According to this method, a region of the second partial region 22, other than the first partial region 21, is irradiated with only light from the image capturing unit 13, and the first partial region 21 is irradiated with both light from the image capturing unit 13 and light from the detection unit 12. As shown in Fig. 4, in the image of the second partial region 22 obtained by the image capturing unit 13 and displayed on the display unit 14a, the brightness of a portion 31 corresponding to the first partial region 21 is higher than that of a remaining (peripheral) portion 32. That is, the difference in brightness between the portion 31 corresponding to the first partial region 21 and the remaining portion 32 can be generated as the position information of the first partial region 21. As another method of generating an image of the second partial region 22 having the position information of the first partial region 21, there is available a method of superimposing and displaying a mark or the like indicating the first partial region 21 as the position information of the first partial region 21 on the image of the second partial region 22 obtained by the image capturing unit 13.

Fig. 4 is a view showing the image of the second partial region 22 displayed on the display unit 14a. Because the measurement apparatus 10 obliquely captures an image of the second partial region 22 by using the image capturing unit 13, the image of the second partial region 22 obtained by the image capturing unit 13 has a trapezoidal shape. For this reason, when displaying the image of the second partial region 22 on the display unit 14a, the display control unit 14 obtains the image shown in Fig. 4 by geometrically converting the trapezoidal image obtained by the image capturing unit 13.

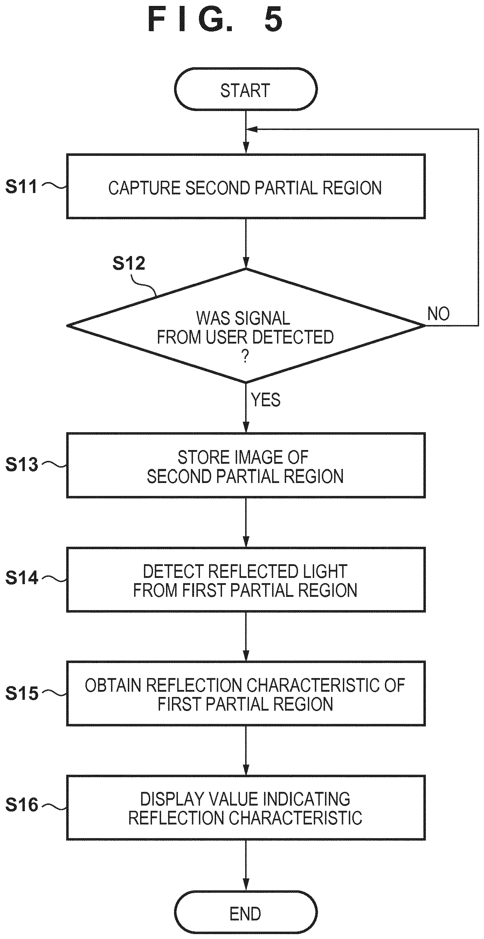

A method of measuring a reflection characteristic of the measurement surface 20 by using the measurement apparatus 10 will be described next with reference to Fig. 5. Fig. 5 is a flowchart showing a method of measuring the reflection characteristic of the measurement surface 20. The control unit 16 can control each step in the flowchart of Fig. 5.

In step S11, the control unit 16 causes the image capturing unit 13 to capture an image of the second partial region 22 while irradiating the first partial region 21 with light from the detection unit 12 and irradiating the second partial region 22 with light from the image capturing unit. The display control unit 14 then displays the image (video) of the second partial region 22 obtained by the image capturing unit 13 on the display unit 14a. In step S12, the control unit 16 determines whether a signal from the user is detected. When the control unit 16 has detected no signal from the user, the process returns to step S11. When the control unit 16 has detected a signal from the user, the process advances to step S13.

In steps S11 and S12, the user positions the measurement apparatus 10 so as to arrange the measurement region (first partial region 21) of the measurement apparatus 10 in a target region of the measurement surface 20 in which a reflection characteristic should be measured, based on the image displayed on the display unit 14a. For example, upon completing positioning of the measurement apparatus 10, the user operates the sensor of the operation unit 15 (for example, presses a button 15a) to cause the measurement apparatus 10 to start measuring a reflection characteristic. At this time, the measurement apparatus 10 transmits an output from the sensor (button 15a) to the control unit 16. The control unit 16 can detect the output as a signal from the user (the signal input from the operation unit 15).

In step S13, the control unit 16 stores the image of the second partial region 22 captured by the image capturing unit 13 and displayed on the display unit 14a in a storage unit 16b. In step S14, the control unit 16 stops (interrupts) irradiating the second partial region 22 with light by the image capturing unit 13 and irradiates the first partial region 21 with only light from the detection unit 12 in order to prevent light other than light from the detection unit 12 from entering the sensor of the detection unit 12. The control unit 16 causes the detection unit 12 (sensor 12d) to detect the light reflected by the first partial region 21. In this case, when the measurement apparatus 10 is provided with a plurality of detection units 12, the control unit 16 sequentially causes the respective detection units 12 to perform a step of detecting the light applied on the first partial region 21 and reflected by the first partial region 21.

In step S15, the control unit 16 obtains a reflection characteristic of the first partial region 21 based on the detection result obtained by the detection unit 12 (the intensity distribution data of the reflected light output from the sensor 12d). In this case, the control unit 16 stores the obtained reflection characteristic in the storage unit 16b in association with (in linkage with) the image of the second partial region 22 stored in the storage unit 16b in step S13. This allows the user to easily grasp a specific region on a measurement surface to which the reflection characteristic stored in the storage unit 16b corresponds. In step S16, the control unit 16 causes the display control unit 14 to display a value indicating the reflection characteristic obtained in step S15 on the display unit 14a. At this time, the control unit 16 may superimpose and display the image of the second partial region 22 stored in the storage unit 16a in step S13 and the value indicating the reflection characteristic on the display unit 14a or may display only the value indicating reflection characteristic on the display unit 14a.

One reflection characteristic measurement is completed through the above steps. After the lapse of a predetermined time (for example, 3 sec), the control unit 16 returns to step S11 to cause the display control unit 14 to display the image (video) of the second partial region 22 obtained by the image capturing unit 13 on the display unit 14a. This allows the user to continuously measure a reflection characteristic of the measurement surface 20.

Upon measuring reflection characteristics a plurality of times, the user may want to check a plurality of measurement results (reflection characteristic index values) obtained by the plurality of times of reflection characteristic measurement. For example, the user may find out a specific measurement result (for example, an abnormal measurement result) from a plurality of measurement results and want to check an image of the measurement region (second partial region 22) stored in association with the found measurement result. For this reason, it is preferable for the user to display the plurality of measurement results and measurement region images so as to easily check them. Accordingly, the measurement system 100 causes the display unit to display a plurality of images obtained by the image capturing unit 13, which respectively correspond to a plurality of measurement results, together with both one group of the plurality of measurement results, and one of the other group which corresponds to one of one group which is selected by the user. The display unit is at least one of the display unit 14a of the measurement apparatus 10 and the display unit 18c of the information processing apparatus 18.

### <First Embodiment>

A measurement system 100 according to the first embodiment displays a list of a plurality of measurement results obtained by a plurality of times of reflection characteristic measurement. The measurement system 100 then displays an image of a measurement region (second partial region 22) stored in association with the measurement result selected by the user from the list of the plurality of measurement results, together with the list of the plurality of measurement results. The following will describe a method of causing a processing unit 18a of an information processing apparatus using a display control unit 18d (control unit) to display a list of a plurality of measurement results on a display unit 18c of an information processing apparatus 18 provided outside a measurement apparatus 10 (housing 11). However, this is not exhaustive, and a similar method can also be applied to a case in which a control unit 16 (processing unit 16a) of the measurement apparatus 10 causes a display control unit 14 to display a list of a plurality of measurement results on a display unit 14a provided on the housing 11. The processing unit 18a can include software having a function of causing the display control unit 18d to display a list of a plurality of measurement results on the display unit 18c.

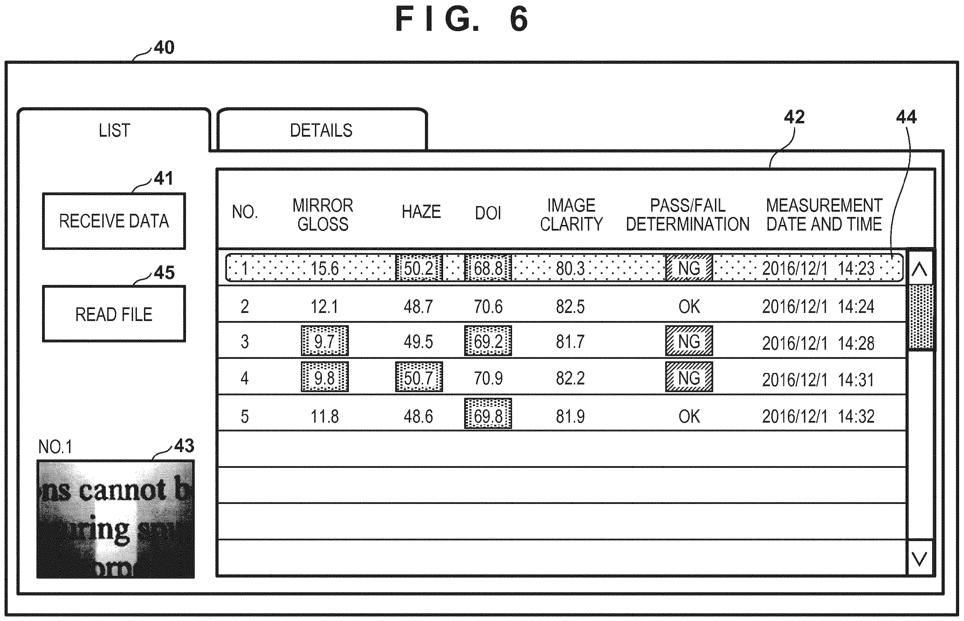

Fig. 6 is a view showing an example of a screen (list window 40) of the display unit 18c that displays a list of a plurality of measurement results obtained by a plurality of (five) times of reflection characteristic measurement. When the user presses the data reception button 41 of the list window 40 via the input unit 18e, the processing unit 18a acquires a plurality of data obtained by a plurality of times of reflection characteristic measurement and stored in the control unit 16 from the control unit 16 wirelessly or via a cable. Each data can include the measurement result (index value) on the reflection characteristic obtained by a measurement unit (a detection unit 12 and the control unit 16) and the image of the measurement region obtained by an image capturing unit 13. In addition to the measurement result and the image of the measurement region, each data may include information such as an attribute of a measurement surface 20, a measurement position on the measurement surface 20, and a measurement date and time. Attributes of the measurement surface 20 can include, for example, the type, material, and sample number of the measurement surface 20. The user can set these pieces of information via buttons 15 provided on the housing 11, for example, when measuring a reflection characteristic. The user may set such information via an input unit 18e when the processing unit 18a acquires a plurality of data from the control unit 16.

The processing unit 18a then stores the plurality of acquired data in the storage unit 18b, and causes the display control unit 18d to display a list of a plurality of measurement results in a region 42 (first region) of the list window 40 based on the plurality of data. In this case, as shown in Fig. 6, the processing unit 18a (display control unit 18d) according to this embodiment displays a mirror gloss, haze, DOI, and image clarity as reflection characteristic index values concerning one measurement result. However, the processing unit 18a may be set to display at least one of these index values. In addition, as shown in Fig. 6, the processing unit 18a displays a measurement date and time in the region 42. However, the processing unit 18a may display information such as attributes of the measurement surface 20 and a measurement position on the measurement surface 20 in addition to the measurement date and time (or instead of the measurement date and time).

Displaying a list of measurement results on reflection characteristics in the region 42 of the list window 40 in this manner allows the user to easily compare a plurality of measurement results obtained by a plurality of times of reflection characteristic measurement. For example, the user can easily find out an abnormal measurement result from a plurality of measurement results.

The processing unit 18a thumbnails an image of a measurement region (second partial region 22) stored in association with the index value selected by the user from a list of a plurality of measurement results in a region 43 (second region) of the list window 40. For example, as shown in Fig. 6, when the user selects one measurement result from the list of the plurality of measurement results displayed in the region 42, the processing unit 18a emphatically displays (for example, displays a selection mark 44) the measurement result selected by the user (No. 1 in Fig. 6). The processing unit 18a then displays, in the region 43 of the list window 40, an image (thumbnail image) of the measurement region stored in association with the measurement result selected by the user (the measurement result on which the selection mark 44 is displayed), together with a list of a plurality of measurement results. Displaying the image of the measurement region associated with the measurement result selected by the user in this manner allows the user to easily check the selected measurement reflection and the image of the corresponding measurement region. Although this embodiment has exemplified the case of displaying the region 42 in which the list of the plurality of measurement results are displayed and the region 43 in which the image of the measurement region is displayed in the same window, this is not exhaustive, and the region 42 and the region 43 may be respectively displayed in different windows.

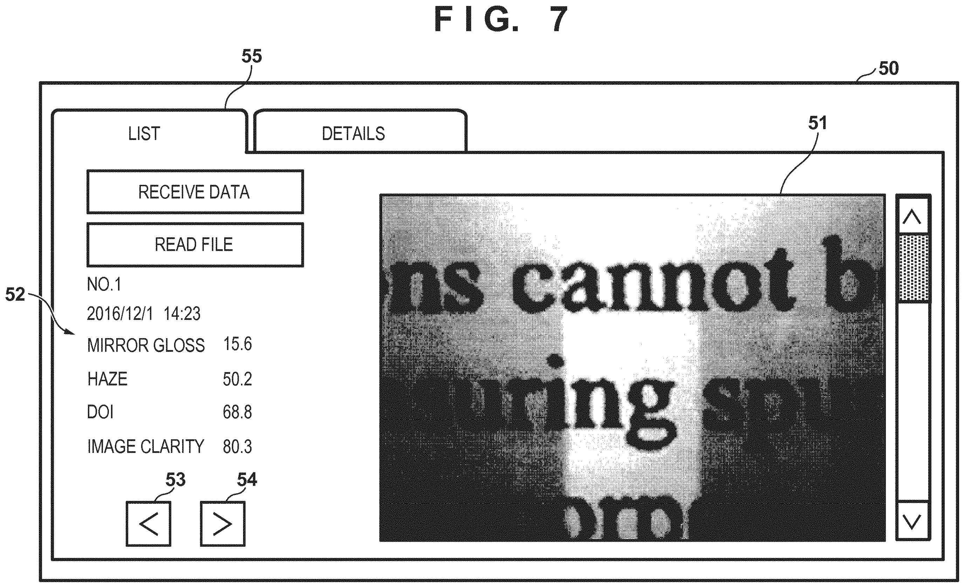

In this case, when checking the image of the measurement region in detail, the user presses the region 43 via the input unit 18e or further presses the measurement result on which the selection mark 44 is displayed. At this time, as shown in Fig. 7, the processing unit 18a switches display tabs to display an enlarged image of the measurement region on the screen of the display unit 18c. Fig. 7 is a view showing the screen (detailed window 50) of the display unit 18c on which the enlarged image of the measurement region is displayed. The detailed window 50 displays an enlarged image of the measurement region associated with the measurement result selected by the user in a region 51 and displays the measurement result (reflection characteristic index value) and measurement date and time information in a region 52. In addition to the measurement result and the measurement date and time, information such as attributes of the measurement surface 20 and a measurement position on the measurement surface 20 may be displayed in the region 52. In addition, when the user presses a return button 53 or advance button 54 of the detailed window 50 via the input unit 18e, the processing unit 18a switches the data (the image of the measurement region and the index value of the reflection characteristic) displayed on the detailed window 50 to another data and displays it. When the user further presses a list tab 55 on the screen, the processing unit 18 switches the detailed window 50 to the list window 40 and displays it.

In this case, the processing unit 18a may determine whether the index value of the reflection characteristic concerning each of the plurality of measurement results falls inside an allowable range, and cause the display control unit 18d to display the determination result, together with the list of the plurality of measurement results, on the display unit 18c. For example, the user sets in advance an allowable range concerning the index value of each reflection characteristic (each of a mirror gloss, haze, DOI, and image clarity) in the processing unit 18a via the input unit 18e. As shown in Fig. 6, the processing unit 18a then identifiably displays index values falling outside the allowable ranges and index values falling inside the allowable ranges in the list of the plurality of measurement results. As one method of identifiably displaying such index values, the processing unit 18a emphatically displays index values falling outside the allowable ranges (or index values falling inside the allowable ranges) by, for example, highlighting in the list of the plurality of measurement results. In the case shown in Fig. 6, the index values falling outside the allowable ranges are highlighted. That is, the plurality of measurement results each include information indicating that the reflection characteristic (index value) falls outside the allowable range.

As shown in Fig. 6, the processing unit 18a may further display pass/fail determination results based on the logical expression set in advance by the user, together with the list of the plurality of measurement results, in the region 42. The logical expression is an expression for comprehensively evaluating reflection characteristics of the measurement surface 20 concerning one measurement result by using, as operational elements, determination results indicating whether the index values of the respective reflection characteristics concerning one measurement result fall within the allowable ranges. Such a logical expression can be arbitrarily set by the user. Assume that concerning the reflection characteristics in one measurement result, if index value A (for example, a mirror gloss) falls within the allowable range and at least one of index value B (for example, a haze) and index value C (for example, a DOI) falls within the allowable range, a pass is achieved (specified conditions are satisfied). In this case, the logical expression is expressed as "A^{∗}(B + C)" by using an AND symbol "*(AND)" and an OR symbol "+(OR)". The processing unit 18a performs pass/fail determination concerning each measurement result by using the above logical expression.

In the case shown in Fig. 6, according to measurement result No. 1, because both the haze (index value B) and the DOI (index value C) fall outside the allowable ranges, the pass/fail determination result based on the above logical expression is "FAIL", and "NG" is displayed in the pass/fail determination field. According to measurement result No. 5, because the mirror gloss (index value A) and the haze (index value B) fall inside the allowable ranges although the DOI (index value C) falls outside the allowable range, the pass/fail determination result based on the above logical expression is "PASS", and "OK" is displayed in the pass/fail determination field. In this case, the symbols displayed in the pass/fail determination fields are not limited to "OK" and "NG" and may be other symbols such as "○" and "×" or "PASS" and "FAIL" as long as they are symbols that can identify pass/fail determination results. Displaying pass/fail determination results in this manner allows the user to easily compare a plurality of measurement results and more easily find out an abnormal measurement result from a list of a plurality of measurement results.

As described above, the measurement system 100 according to this embodiment displays a list of a plurality of measurement results obtained by a plurality of times of reflection characteristic measurement. The measurement system 100 then displays an image of a measurement region (second partial region 22) stored in association with the measurement result selected by the user from a list of a plurality of measurement results, together with the list of measurement results. This allows the user to easily compare a plurality of measurement results and easily check an image of a measurement result associated with the selected measurement result. The embodiment has exemplified the case in which when the user presses the data reception button 41, a list of a plurality of measurement results stored in the control unit 16 is displayed. However, this is not exhaustive. That is, when the user presses a file read button 45, a list of a plurality of measurement results that have already been stored in the information processing apparatus 18 (storage unit 18b) may be displayed.

### <Second Embodiment>

The first embodiment has exemplified the case in which a list of a plurality of measurement results obtained by a plurality of times of measurement of the reflection characteristic is displayed, and an image of a measurement region associated with the measurement result selected by the user from the list of measurement results is displayed together with the measurement result. The second embodiment is configured to display a list of images of a plurality of measurement regions obtained by an image capturing unit 13 in a plurality of times of reflection characteristic measurement. A measurement result (index value) on a reflection characteristic associated with the image selected by the user from the list of images is then displayed, together with the list of images. Other arrangements are the same as those of the first embodiment, and hence a description of them will be omitted.

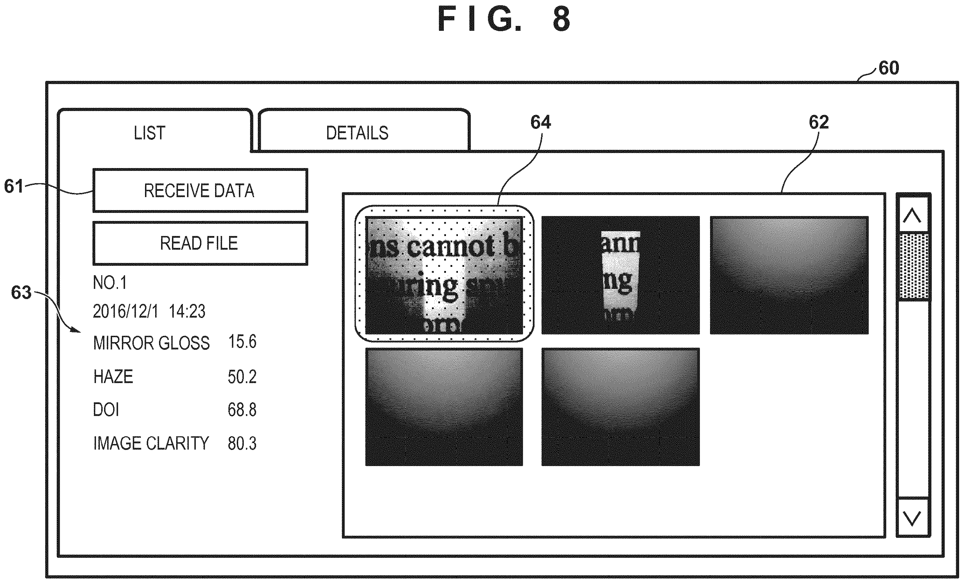

Fig. 8 is a view showing an example of a screen (list window 60) of a display unit 18c which displays a list of a plurality of images (images of measurement regions) obtained by the image capturing unit 13 in a plurality of (five) times of reflection characteristic measurement. When the user presses a data reception button 61 of the list window 60 via an input unit 18e, a processing unit 18a acquires a plurality of data obtained by a plurality of times of reflection characteristic measurement and stored in a control unit 16 from the control unit 16 wirelessly or via a cable. As described above, each data can include the measurement result (index value) on the reflection characteristic obtained by a measurement unit (a detection unit 12 and the control unit 16) and the image of the measurement region obtained by the image capturing unit 13. The processing unit 18a stores a plurality of obtained data in a storage unit 18b, and causes a display control unit 18d to display a list of thumbnail image of measurement regions in a region 62 of the list window 60 based on the plurality of data. The processing unit 18a also displays, in a region 63 of the list window 60, measurement results (index values) on reflection characteristics stored in association with an image, of the list of thumbnail image of the measurement regions, which is selected by the user. For example, as shown in Fig. 8, when the user selects one image from the list of the images of the measurement regions displayed in the region 62, the processing unit 18a emphatically displays (for example, displays a selection mark 64) the image selected by the user. The processing unit 18a then displays, in the region 63 of the list window 60, the measurement results (index values) on the reflection characteristics stored in association with the image of the measurement region selected by the user (the image on which the selection mark 64 is displayed), together with the list of the images of the plurality of measurement regions.

In this embodiment, as shown in Fig. 8, a mirror gloss, haze, DOI, and image clarity are displayed as the index values of reflection characteristics in the region 63 of the list window 60. However, setting may be made to display at least one of these index values. In addition, as shown in Fig. 8, although the measurement date and time is displayed in the region 63, information such as attributes of the measurement surface 20 and a measurement position on the measurement surface 20 may be displayed in addition to the measurement date and time (or instead of the measurement date and time).

When checking an image of a measurement region in detail, the user presses the region 63 via the input unit 18e or further presses the image on which the selection mark 64 is displayed. At this time, the processing unit 18a switches display tabs, and displays an enlarged image of the selected measurement region on a display unit 18c, as shown in Fig. 6. A detailed window in which an enlarged image of a selected measurement region is displayed is the same as that in the first embodiment, and hence a description of the window will be omitted.

As described above, this embodiment is configured to display a list of thumbnails of images of a plurality of measurement regions obtained by the image capturing unit 13 in a plurality of times of reflection characteristic measurement. Measurement results (index values) on reflection characteristic associated with the image selected by the user from the list of the images of the measurement regions are displayed, together with the list of the images of the measurement regions. This allows the user to easily check the results on the plurality of reflection characteristic measurements and the image of the measurement region.

### <Other Embodiments>

The present invention can also be implemented by supplying a program for implementing one or more functions of each embodiment described above to a system or apparatus via a network or a storage medium and causing one or more processors in the system or apparatus to read and execute the program. The present invention can also be implemented by a circuit implementing one or more functions (for example, ASIC).

The present invention is not limited to the above embodiments, and various changes and modifications can be made within the spirit and scope of the present invention. Therefore, to apprise the public of the scope of the present invention, the following claims are made.

This application claims the priority from Japanese Patent Application No. 2017-004612, filed January 13, 2017, which is hereby incorporated by reference herein in its entirety.

## Claims

1. A measurement apparatus comprising:
a measurement unit configured to measure a reflection characteristic of a surface;
an image capturing unit configured to, by image-capturing a measurement region on the surface on which the reflection characteristic is measured by the measurement unit, obtain an image of the measurement region; and
a control unit configured to cause a display unit to display a plurality of measurement results obtained by a plurality of times of measurement by the measurement unit,
wherein the control unit causes the display unit to display the image obtained by the image capturing unit which corresponds to a measurement result selected from the plurality of measurement results, together with the plurality of measurement results.

2. The measurement apparatus according to claim 1, wherein each of the plurality of measurement results includes information indicating that the reflection characteristic falls outside an allowable range.

3. The measurement apparatus according to claim 2, wherein the control unit causes the display unit to identifiably display the reflection characteristic falling outside the allowable range and the reflection characteristic falling inside the allowable range.

4. The measurement apparatus according to any one of claims 1 to 3, wherein the control unit causes the display unit to display information indicating an attribute of the surface on which the reflection characteristic is measured.

5. The measurement apparatus according to any one of claims 1 to 4, wherein the image capturing unit obtains the image by image-capturing a region including part of a measurement region in which the reflection characteristic is measured by the measurement unit.

6. The measurement apparatus according to claim 5, wherein the image of the region displayed on the display unit by the control unit includes information indicating the measurement region.

7. The measurement apparatus according to any one of claims 1 to 6, further comprising a housing incorporating the measurement unit and the image capturing unit,
wherein the display unit is provided outside the housing.

8. The measurement apparatus according to any one of claims 1 to 7, wherein the control unit causes the display unit to display the plurality of measurement results and the image so as to make one window include a first region in which the plurality of measurement results are displayed and a second region in which the image of the surface is displayed.

9. The measurement apparatus according to any one of claims 1 to 7, wherein the control unit causes the display unit to display the plurality of measurement results and the image so as to make different windows respectively include a first region in which the plurality of measurement results are displayed and a second region in which the image of the surface is displayed.

10. The measurement apparatus according to any one of claims 1 to 8, wherein the reflection characteristic includes at least one of a mirror gloss, a haze, a DOI, and an image clarity.

11. An information processing method of processing a measurement result obtained by measuring a reflection characteristic of a surface by using a measurement unit and an image of a measurement region, on the surface on which the reflection characteristic is measured by the measurement unit, which is obtained by image-capturing the measurement region, comprising a step of causing a display unit to display a plurality of measurement results obtained by a plurality of times of measurement by the measurement unit,
wherein the step includes causing the display unit to display the image obtained by the image capturing unit, which corresponds to a measurement result selected from the plurality of measurement results, together with the plurality of measurement results.

12. A program for causing a computer to execute each step in the information processing method defined in claim 11.

13. A measurement apparatus comprising:
a measurement unit configured to measure a reflection characteristic of a surface;
an image capturing unit configured to obtain an image of the measurement region by image-capturing a measurement region on the surface on which the reflection characteristic is measured by the measurement unit; and
a control unit configured to display a plurality of images obtained by the image capturing unit concerning a plurality of measurement results obtained by a plurality of times of measurement by the measurement unit,
wherein the control unit causes the display unit to display a measurement result, of the plurality of measurement results, which corresponds an image selected from the plurality of images, together with the plurality of images.

14. A measurement apparatus comprising:
a measurement unit configured to measure a reflection characteristic of a surface;
an image capturing unit configured to obtain an image of the measurement region by image-capturing a measurement region on the surface on which the reflection characteristic is measured by the measurement unit;
a display unit; and
a control unit configured to cause the display unit to display a plurality of measurement results obtained by a plurality of times of measurement by the measurement unit,
wherein the control unit causes the display unit to display the plurality of images obtained by the image capturing unit, which respectively correspond to the plurality of measurement results, together with both one group of the plurality of measurement results and one measurement result of a remaining group which corresponds to one measurement result selected from the one group.

15. An information processing apparatus that causes a display unit to display a plurality of measurement results obtained by a plurality of times of measurement concerning a reflection characteristic of a surface, comprising a control unit configured to cause the display unit to display a plurality of images obtained by image-capturing a measurement region on the surface, which respectively correspond to the plurality of measurement results, together with both one group of the plurality of measurement results and one measurement result of a remaining group which corresponds to one measurement result selected from the one group.

16. An information processing method of causing a display unit to display a plurality of measurement results obtained by a plurality of times of measurement concerning a reflection characteristic of a surface, comprising causing the display unit to display a plurality of images obtained by image-capturing a measurement region on the surface, which respectively correspond to the plurality of measurement results, together with both one group of the plurality of measurement results and one measurement result of a remaining group which corresponds to one measurement result selected from the one group.

17. A program for causing a computer to execute an information processing method defined in claim 16.

## Amended claims

### Amended claims under Art. 19.1 PCT

1. (Currently Amended) A measurement apparatus comprising:
a measurement unit configured to measure a reflection characteristic of a first region in a surface;
an image capturing unit configured to obtain an image of a second region that is larger than the first region and includes the first region in which the reflection characteristic is measured by the measurement unit, by image-capturing the second region in a state of illuminating the first region so as to be brighter than a region other than the first region in the second region; and
a control unit configured to cause a display unit to display a plurality of measurement results obtained by a plurality of times of measurement by the measurement unit,
wherein the control unit causes the display unit to display the image obtained by the image capturing unit which corresponds to a measurement result selected from the plurality of measurement results, together with the plurality of measurement results.

2. The measurement apparatus according to claim 1, wherein each of the plurality of measurement results includes information indicating that the reflection characteristic falls outside an allowable range.

3. The measurement apparatus according to claim 2, wherein the control unit causes the display unit to identifiably display the reflection characteristic falling outside the allowable range and the reflection characteristic falling inside the allowable range.

4. The measurement apparatus according to any one of claims 1 to 3, wherein the control unit causes the display unit to display information indicating an attribute of the surface on which the reflection characteristic is measured.

5. (Currently Amended) The measurement apparatus according to any one of claims 1 to 4, wherein the image capturing unit generates the state by illuminating the first region to overlap on an illumination of the second region, and obtains the image by image-capturing [[a]] the second region in the state.

6. (Currently Amended) The measurement apparatus according to any one of claims 1 to 5, wherein the image of the second region displayed on the display unit by the control unit includes information indicating the first region.

7. The measurement apparatus according to any one of claims 1 to 6, further comprising a housing incorporating the measurement unit and the image capturing unit,
wherein the display unit is provided outside the housing.

8. (Currently Amended) The measurement apparatus according to any one of claims 1 to 7, wherein the control unit causes the display unit to display the plurality of measurement results and the image so as to make one window include a first display region in which the plurality of measurement results are displayed and a second display region in which the image of the surface is displayed.

9. (Currently Amended) The measurement apparatus according to any one of claims 1 to 7, wherein the control unit causes the display unit to display the plurality of measurement results and the image so as to make different windows respectively include a first display region in which the plurality of measurement results are displayed and a second display region in which the image of the surface is displayed.

10. The measurement apparatus according to any one of claims 1 to 8, wherein the reflection characteristic includes at least one of a mirror gloss, a haze, a DOI, and an image clarity.

11. (Currently Amended) An information processing method of processing a measurement result obtained by measuring a reflection characteristic of a first region in a surface by using a measurement unit, and an image of a second region obtained by image-capturing the second region that is larger than the first region and includes the first region in which the reflection characteristic is measured by the measurement unit, in a state of illuminating the first region so as to be brighter than a region other than the first region in the second region, comprising
a step of causing a display unit to display a plurality of measurement results obtained by a plurality of times of measurement by the measurement unit,
wherein the step includes causing the display unit to display the image obtained by the image capturing unit, which corresponds to a measurement result selected from the plurality of measurement results, together with the plurality of measurement results.

12. A program for causing a computer to execute each step in the information processing method defined in claim 11.

13. (Currently Amended) A measurement apparatus comprising:
a measurement unit configured to measure a reflection characteristic of a first surface in a surface;
an image capturing unit configured to obtain an image of the second region that is larger than the first region and includes the first region in which the reflection characteristic is measured by the measurement unit, by image-capturing the second region in a state of illuminating the first region so as to be brighter than a region other than the first region in the second region; and
a control unit configured to display a plurality of images obtained by the image capturing unit concerning a plurality of measurement results obtained by a plurality of times of measurement by the measurement unit,
wherein the control unit causes the display unit to display a measurement result, of the plurality of measurement results, which corresponds an image selected from the plurality of images, together with the plurality of images.

14. (Currently Amended) A measurement apparatus comprising:
a measurement unit configured to measure a reflection characteristic of a first region in a surface;
an image capturing unit configured to obtain an image of the second region that is larger than the first region and includes the first region in which the reflection characteristic is measured by the measurement unit, by image-capturing the second region in a state of illuminating the first region so as to be brighter than a region other than the first region in the second region;
a display unit; and
a control unit configured to cause the display unit to display a plurality of measurement results obtained by a plurality of times of measurement by the measurement unit,
wherein the control unit causes the display unit to display the plurality of images obtained by the image capturing unit, which respectively correspond to the plurality of measurement results, together with both one group of the plurality of measurement results and one measurement result of a remaining group which corresponds to one measurement result selected from the one group.

15. (Currently Amended) An information processing apparatus that causes a display unit to display a plurality of measurement results obtained by a plurality of times of measurement concerning a reflection characteristic of a first region in a surface, comprising:
a control unit configured to cause the display unit to display a plurality of images obtained by image-capturing a second region that is larger than the first region and includes the first region, which respectively correspond to the plurality of measurement results, together with both one group of the plurality of measurement results and one measurement result of a remaining group which corresponds to one measurement result selected from the one group.

16. (Currently Amended) An information processing method of causing a display unit to display a plurality of measurement results obtained by a plurality of times of measurement concerning a reflection characteristic of a first region in a surface, comprising:
causing the display unit to display a plurality of images obtained by image-capturing a second region that is larger than the first region and includes the first region, which respectively correspond to the plurality of measurement results, together with both one group of the plurality of measurement results and one measurement result of a remaining group which corresponds to one measurement result selected from the one group.

17. A program for causing a computer to execute an information processing method defined in claim 16.
